# EUROPEAN PATENT SPECIFICATION

(11) **EP 4 426 929 B1**
(45) Date of publication and mention of the grant of the patent: **29.04.2026**
(21) Application number: 22805770.9
(22) Date of filing: 03.11.2022
(51) Int. Cl.: F03D 13/35, F03D 7/02, F03D 1/06

(54) **A METHOD FOR REDUCING ROTOR IMBALANCE IN A WIND TURBINE**
VERFAHREN ZUR REDUZIERUNG DER ROTORUNWUCHT IN EINER WINDTURBINE
PROCÉDÉ DE RÉDUCTION DE DÉSÉQUILIBRE DE ROTOR DANS UNE ÉOLIENNE

(30) Priority: 04.11.2021 DK PA202170541
(43) Date of publication of application: 11.09.2024
(73) Proprietor: VESTAS WIND SYSTEMS A/S, 8200 Aarhus N (DK)
(72) Inventor: SØRENSEN, Kim Hylling, 8200 Aarhus N (DK); LARSEN, Torben Juul, 8200 Aarhus N (DK); NIELSEN, Thomas S. Bjertrup, 8200 Aarhus N (DK); ØSTERLUND, Mikkel Kiilerich, 8200 Aarhus N (DK); RUDOLF, Robert Thomas, 8200 Aarhus N (DK); BØTTCHER, Peter, 8200 Aarhus N (DK)
(74) Representative: Vestas Patents Department
(86) International application number: PCT/DK2022/050231
(87) International publication number: WO 2023/078520

(56) References cited:
- EP-A2- 2 142 795
- WO-A1-2021/089097
- CN-A- 102 536 683
- GB-A- 2 485 595
- US-A1- 2009 169 379

## Description

### FIELD OF THE INVENTION

The present invention relates to a method for controlling a wind turbine being provided with pre-tensioned blade connecting wires interconnecting the wind turbine blades in order to allow the wind turbine blades to mutually support each other. In the method according to the invention, the pre-tension applied to the blade connecting wires is adjusted in order to counteract rotor imbalance of the wind turbine.

### BACKGROUND OF THE INVENTION

During operation of a wind turbine, as well as during standstill, the components of the wind turbine are subjected to various loads. For instance, the wind turbine blades of the wind turbine are subjected to loads originating from gravity acting on the wind turbine blades, loads originating from wind pressure on the wind turbine blades, loads originating from changes in wind direction, turbulence, etc.

As the size of wind turbine blades increases, the loads on the wind turbine also increase. In order to handle such increased loads, the amount of material used for manufacturing the wind turbine may be increased. However, this increases the weight as well as the manufacturing costs of the wind turbine.

As an alternative to increasing the amount of material used for the wind turbine, in particular for the wind turbine blades, the wind turbine may be provided with blade connecting wires, i.e. wires which interconnect the wind turbine blades. Such blade connecting wires cause the wind turbine blades to mutually support each other, in the sense that loads on the wind turbine blades are 'shared' among the wind turbine blades, via the blade connecting wires. The blade connecting wires may be pre-tensioned.

In wind turbines, rotor imbalance may occur, in the sense that forces acting on the wind turbine blades differ from one wind turbine blade to another. This may lead to undesired uneven loads on various parts of the wind turbine, and it is therefore desirable to avoid rotor imbalance to the greatest possible extent. Rotor imbalance may originate from various causes, some of which may be regarded as static and some of which may be regarded as dynamic. Static rotor imbalance may, e.g., be caused by variations in mass or mass distribution from one wind turbine blade to another, variations in length, elasticity, etc. from one blade connecting wire to another, ice formation on the wind turbine blades, fouling of the wind turbine blades, etc. Dynamic rotor imbalance may, e.g., be caused by variations in aerodynamic conditions from one wind turbine blade to another, e.g. originating from wind shear, wake effects, etc.

Static rotor imbalances may, e.g., be handled by manually performing maintenance and/or cleaning of the wind turbine blades, and/or by adding calibration masses to the wind turbine blades.

CN 102536683 B discloses a zonal cable device for enhancing stability of blades of large wind turbines. The zonal cable device comprises a zonal cable system and a cable tension adjusting system. The cable tension adjusting system comprises an automatic controller connected with a zonal tension screw adjuster via a control line. Relaxed tension occurs during the operation of the wind turbine. In this case, after the relaxed tension is sensed by the tension sensor, the zonal tension screw adjuster is rotated on a front tension bearing shaft to adjust the tension of the zonal cable system, in order to allow for the tension of the blade on the rotating surface to reach a reasonable set value. All adjustment processes can be controlled and automatically completed by the automatic controller mounted in the wind turbine hub.

US 2009/169379 A discloses a wind energy capture system with a blade/sail implementation using retractable sails. Further is disclosed supporting the turbine blades at their tip end by using a set of support cables which provide tension.

### DESCRIPTION OF THE INVENTION

It is an object of embodiments of the invention to provide a method for controlling a wind turbine in which rotor imbalances are handled in an easy and cost effective manner.

The invention provides a method for controlling a wind turbine according to claim 1, the wind turbine comprising a tower, a nacelle mounted on the tower, a hub mounted rotatably on the nacelle, and three or more wind turbine blades, each wind turbine blade extending between a root end connected to the hub via a pitch mechanism, and a tip end, the wind turbine further comprising blade connecting wires, each blade connecting wire extending between a connection point on one wind turbine blade and a connection point on a neighbouring wind turbine blade, and pre-tension wires, each pre-tension wire being connected to one of the blade connecting wires and to a pre-tension adjustment mechanism, the method comprising the steps of:
- measuring at least one parameter of the wind turbine,
- deriving an estimate for a rotor imbalance of the wind turbine from the at least one measured parameter, and
- controlling the pre-tension adjustment mechanism based on the estimated rotor imbalance in order to counteract the rotor imbalance.

Thus, the method according to the invention is a method for controlling a wind turbine. The wind turbine is a pitch controlled wind turbine, i.e. a wind turbine which comprises wind turbine blades which are able to rotate about a substantially longitudinal pitch axis, in order to adjust an angle of attack between the wind turbine blades and the incoming wind, during operation of the wind turbine.

The wind turbine comprises a tower and a nacelle mounted on the tower. The wind turbine further comprises a hub mounted rotatably on the nacelle and three or more wind turbine blades. Each wind turbine blade extends between a root end which is connected to the hub via a pitch mechanism, and a tip end. Thus, the wind turbine blades rotate along with the hub, relative to the nacelle, and the tip ends of the wind turbine blades point away from the hub. Since the wind turbine blades are connected to the hub via pitch mechanisms, each wind turbine blade is able to rotate relative to the hub, i.e. to perform pitching movements. The hub and the wind turbine blades form a rotor of the wind turbine.

The nacelle is normally mounted on the tower via a yaw system allowing the nacelle to rotate relative to the tower in order to appropriately orient the rotor in accordance with the direction of the wind.

The wind turbine further comprises blade connecting wires. Each blade connecting wire extends between a connection point on one wind turbine blade and a connection point on a neighbouring wind turbine blade. Accordingly, each blade connecting wire interconnects two neighbouring wind turbine blades.

The wind turbine further comprises pre-tension wires. Each pre-tension wire is connected to one of the blade connecting wires and to a pre-tension adjustment mechanism. Accordingly, the pre-tension wires pull the blade connecting wires towards the pre-tension adjustment mechanism, and thereby the pre-tension wires provide pre-tension to the blade connecting wires. Furthermore, the pre-tension provided to the blade connecting wires by the pre-tension wires can be adjusted by appropriately operating or manipulating the pre-tension adjustment mechanism.

The pre-tension adjustment mechanism may be arranged in the hub, at the hub or near the hub. As an alternative, the pre-tension adjustment mechanism may be arranged in the blade root of one or more of the wind turbine blades, or in a part of the wind turbine blades between the root end and the connection point.

In the present context the term 'wire' should be interpreted broadly to cover any suitable kind of tension element, such as metal wires or ropes, fibre ropes, composite pultrusion, metal rods, etc.

The blade connecting wires may have a stiffness which differs from the stiffness of the pre-tension wires, or the stiffness of the blade connecting wires and the pre-tension wires may be identical.

The pre-tension wires are connected to the blade connecting wires at a position which is distanced from each of the connecting points on the wind turbine blades, e.g. with substantially equal distance to the connecting points, i.e. approximately halfway between the wind turbine blades along the blade connecting wire.

The pre-tensioned blade connecting wires cause the wind turbine blades to mutually support each other, in the sense that loads on the wind turbine blades, in particular edgewise loads and flapwise loads, are 'shared' among the wind turbine blades, via the pre-tensioned blade connecting wires. Thereby the loads on the wind turbine blades, during operation as well as during standstill or idling, can be handled without requiring higher material thickness, and thereby increased weight and higher manufacturing costs.

The wind turbine may be an upwind wind turbine. In this case the rotor of the wind turbine faces the incoming wind, and thereby the flapwise loads on the wind turbine blade, originating from the wind, push the wind turbine blades towards the hub and the tower.

As an alternative, the wind turbine may be a downwind wind turbine. In this case the rotor of the wind turbine is directed opposite to the incoming wind, and thereby the flapwise loads on the wind turbine blades, originating from the wind, push the wind turbine blades away from the hub and the tower.

In the method according to the invention, at least one parameter of the wind turbine is initially measured. The measured parameter(s) may relate to loads on the wind turbine, in particular loads related to wind turbine components forming part of the rotor, such as wind turbine blades, hub, etc., and/or loads on the tower, drive train, etc., deflections, vibrations, etc.

Next, an estimate for a rotor imbalance of the wind turbine is derived from the at least one measured parameter. In the present context the term 'rotor imbalance' should be interpreted to mean a situation in which forces acting on the wind turbine blades differ from one wind turbine blade to another, thereby causing uneven loads across the rotor and thereby uneven loads on parts of the wind turbine which are affected by the rotor, such as wind turbine blades, hub, drive train, tower, etc. As described above, the rotor imbalance may originate from static causes, such as differences in mass and/or mass distribution of the wind turbine blades, and/or from dynamic causes, such as wind shear, wake effects, e.g. in the form of partial wake, turbulence, gusts, etc.

Static rotor imbalances may be referred to as '0P imbalances, since they do not vary cyclically as a function of azimuth position of the wind turbine blades and the rotor. Similarly, dynamic rotor imbalances may be referred to as '1P imbalances' since they vary cyclically as a function of azimuth position of the wind turbine blades and the rotor in such a manner that one cycle is completed for each full rotation of the wind turbine blades and the rotor.

Since the estimate for the rotor imbalance is derived from the at least one measured parameter of the wind turbine, the estimated rotor imbalance reflects the actually occurring and experienced imbalances of loads across the rotor.

Finally, the pre-tension adjustment mechanism is controlled based on the estimated rotor imbalance in order to counteract the rotor imbalance.

By controlling the pre-tension adjustment mechanism, the pre-tension applied by the pre-tension wires to the blade connecting wires is adjusted. Thereby the mutual support among the wind turbine blades is also adjusted. More specifically, each pre-tension wire determines the pre-tension applied to the blade connecting wire which it is connected to, and thereby the mutual support among the two wind turbine blades which are interconnected by that blade connecting wire. Thus, in the case that the estimated rotor imbalance reveals that the loads in a part of the rotor which includes two neighbouring wind turbine blades are higher than loads on other parts of the rotor, then the pre-tension wire which is connected to the blade connecting wire interconnecting these two wind turbine blades may be adjusted in such a manner that the pre-tension applied to that blade connecting wire handle the additional loads, and thereby counteract the rotor imbalance.

Static, or 0P, rotor imbalances may, e.g., be handled by applying an appropriate static offset in the applied pre-tension among the pre-tension wires, in such a manner that the static or permanent imbalances of the rotor are addressed. Dynamic, or 1P, rotor imbalances may, e.g., be handled by introducing a sinusoidal variation in the applied pre-tension of each of the pre-tension wires, where the period of the sinusoidal variation corresponds to one full rotation of the wind turbine blades and the rotor.

Handling rotor imbalances by appropriately controlling the pre-tension adjustment mechanism, thereby adjusting the pre-tension applied to the blade connecting wires by the pre-tension wires, based on actual measurements on the wind turbine, is an easy and cost effective way of handling rotor imbalances. Furthermore, the rotor imbalances can be handled fast and accurately.

The method according to the invention may be performed during power production of the wind turbine, or during idling or standstill of the wind turbine.

The step of deriving an estimate for a rotor imbalance may comprise deriving an estimate for a static rotor imbalance.

As described above, in the present context the term 'static rotor imbalance' should be interpreted to mean a rotor imbalance which is present regardless of whether the wind turbine is operating or not, i.e. a rotor imbalance which is not caused by dynamic effects, such as the wind acting on the rotor, the rotation of the rotor, etc.

Static rotor imbalances may, e.g., be caused by manufacturing differences of the wind turbine blades. Such manufacturing differences could, e.g., relate to mass or mass distribution of the wind turbine blades, length of the wind turbine blades, elasticity of the wind turbine blades, blade outer geometry of the wind turbine blades, etc. Alternatively or additionally, static rotor imbalances may be caused by causes which occur after erection of the wind turbine, such as fouling of the wind turbine blades, ice formation on the wind turbine blades, wear on the wind turbine blades or other parts of the wind turbine, etc. Alternatively or additionally, static rotor imbalances may be caused by causes which occur during erection of the wind turbine, such as differences in coning angles of the wind turbine blades. Finally, static rotor imbalances may be caused by the blade connecting wires and/or the pre-tension wires, e.g. due to variations in wire stiffness and/or length. As described above, static rotor imbalances may be referred to as '0P imbalances.

Thus, according to this embodiment, the pre-tension applied to the blade connecting wires is adjusted in order to counteract rotor imbalances which are present all the time, in an easy and cost effective manner. This decreases the requirements regarding accuracy during manufacturing of the wind turbine parts, in particular the wind turbine blades, and during erection of the wind turbine. Furthermore, adding calibration masses to the wind turbine blades is not required. This significantly reduces the costs of manufacturing and erecting the wind turbine, while efficiently preventing excessive wear on the wind turbine due to permanent rotor imbalances.

Alternatively or additionally, the step of deriving an estimate for a rotor imbalance may comprise deriving an estimate for a dynamic rotor imbalance. As described above, in the present context the term 'dynamic rotor imbalance' should be interpreted to mean rotor imbalances which are caused by external factors, and which are therefore varying as a function of time, and in accordance with the prevailing operating or ambient conditions. Dynamic rotor imbalance may, e.g., be caused by variations in aerodynamic conditions from one wind turbine blade to another, e.g. due to wind shear, wake effects, turbulence, gust conditions, etc. As described above, dynamic rotor imbalances may be in the form of 1P imbalances.

The step of deriving an estimate for a rotor imbalance may comprise passing the measurements of the at least one parameter through a low pass filter.

According to this embodiment, only the low frequent variations in the at least one measured parameter are taken into account when estimating the rotor imbalance. Thereby it is ensured that only true rotor imbalances are detected, and high frequent variations, which are not related to rotor imbalances, are filtered out. Accordingly, it is ensured that subsequent control of the pre-tension adjustment mechanism is in fact performed in a manner which counteracts the true rotor imbalances.

The step of measuring at least one parameter of the wind turbine comprises measuring an edge moment of each of the wind turbine blades.

In the present context the term 'edge moment' should be interpreted to mean a moment measured at the wind turbine blade in an edgewise direction, i.e. in a direction which substantially extends between a leading edge and a trailing edge of the wind turbine blade. This direction will often be completely or nearly accommodated in the rotor plane of the wind turbine.

Edgewise loads on the wind turbine blades can be very damaging, and they may be difficult to handle by known methods. It is therefore an advantage of this embodiment of the invention that rotor imbalances related to edgewise loads or moments of the wind turbine blade can be handled by appropriately adjusting the pre-tension adjustment mechanism.

The edgewise moment may, e.g., be an edge root moment, i.e. an edge moment measured at or near the root of the wind turbine blade. As an alternative, the edge moment may be measured in another part of the wind turbine blade, e.g. in a part of the blade which is arranged between the root end and the connection point, for instance within an inner 20% of the blade length or radius.

The edge moments of the wind turbine blades may, e.g., be measured by measuring strain at the wind turbine blades, using a suitable strain sensor, such as one or more strain gauges or one or more optical fibres.

The step of deriving an estimate for a rotor imbalance of the wind turbine may comprise comparing the edge moment of each wind turbine blade to a mean edge moment of the wind turbine blades.

According to this embodiment, a mean edge moment of the measured edge moments of the wind turbine blades is calculated or derived, e.g. in a simple or standard manner. For instance, the mean edge moment may be derived during operation of the wind turbine, during several rotation of the rotor as a running signal.

The individual measured edge moments of the wind turbine blades are then compared to the mean edge moment. If the rotor is perfectly balanced, then the edge moments of the wind turbine blades should be identical, and accordingly the edge moment of each wind turbine blade will be equal to the mean edge moment. On the other hand, if one or more of the measured edge moments deviates from the mean edge moment, this is an indication that a rotor imbalance is present. Accordingly, comparing the measured edge moments to the mean edge moment will reveal whether or not a rotor imbalance is present. Further, the magnitude of the deviation(s) reveals how significant the rotor imbalance is. Finally, the comparison can reveal which part of the rotor is affected and in which manner, in particular which of the wind turbine blades are affected.

The step of controlling the pre-tension adjustment mechanism may comprise adjusting the pre-tension applied by each pre-tension wire in such a manner that the difference between the edge moment of each wind turbine blade and the mean edge moment of the wind turbine blades is decreased.

As described above, when the rotor is perfectly balanced, it is expected that the edge moments of the wind turbine blades are identical to each other and to the mean edge moment. Accordingly, controlling the pre-tension adjustment mechanism in such a manner that the pre-tension applied by each pre-tension wire is adjusted in such a manner that the differences between the edge moment of each wind turbine blade and the mean edge moment are decreased, will cause the edge moments of the blades to approach each other, thereby decreasing the rotor imbalance.

The pre-tension adjustment mechanism may, e.g., be controlled in such a manner that the pre-tension provided by some pre-tension wires is increased, while the pre-tension provided by other pre-tension wires is decreased. As an alternative, the pre-tension provided by the pre-tension wires may be adjusted in such a manner that the edge moments of all wind turbine blades approach the highest or the lowest edge moment measured on one of the wind turbine blades.

The pre-tension adjustment may, e.g. be calculated in the following manner. After measuring the edgewise moment signals of the wind turbine blades, the signals may be transferred from the individual blade coordinate systems to a reference coordinate system, which rotates along with the rotor, by means of coordinate transformations. The vector amplitude of the signals may then be processed in the reference coordinate system, and the processed signals may be transformed back to the individual blade coordinate systems, by means of an inverse coordinate transformation to obtain the tension modification signal. This may result in a sinusoidally varying pre-tension adjustment signal, with a period defined by the azimuth rotation of the rotor.

As an alternative to measuring an edge moment of each of the wind turbine blades, the step of measuring at least one parameter of the wind turbine may comprise measuring a tension in each of the pre-tension wires. The tension in the pre-tension wires may be measured directly or indirectly, e.g. by measuring a hydraulic pressure or piston stroke. The tension of a given pre-tension wire is an indication of how much or to which extent the pre-tension wire is pulling the blade connecting wire it is connected to, and thereby it provides a measure for the pre-tension which the pre-tension wire is currently providing to the blade connecting wire. If the tension in the pre-tension wires varies from one pre-tension wire to another, this may be an indication that a rotor imbalance is present. Alternatively, the pre-tension adjustment mechanism may be controlled to adjust the pre-tension wires to provide pre-tensions which are not identical, but where the provided pre-tensions differ from each other by amounts which counteract a static rotor imbalance, e.g. originating from variations in mass and/or mass distribution of the wind turbine blades. In this case, if the tensions in the pre-tension wires differ from each other in a manner which differs from this fixed difference, this may be an indication that a further rotor imbalance is present, e.g. caused by dynamic effects.

Alternatively or additionally, the step of measuring at least one parameter of the wind turbine may comprise measuring another suitable parameter which is related to rotor imbalance, such as main shaft tilt moment, yaw moment, tower or nacelle acceleration levels, drivetrain torque, power signals, flap moment signals, etc.

The step of controlling the pre-tension mechanism may comprise individually adjusting the pre-tension provided by the respective pre-tension wires. According to this embodiment, the adjustment of the pre-tension provided by each pre-tension wire is adjusted independently of the adjustments of the pre-tension provided by each of the other pre-tension wires. Thereby the adjustments of the provided pre-tensions can be accurately designed to counteract the detected rotor imbalance, e.g. increasing the pre-tension applied in parts of the rotor where increased mutual support of the wind turbine blades is required and/or decreasing the pre-tension applied in parts of the rotor where decreased mutual support of the wind turbine blades is required.

As an alternative, the adjustable pre-tension mechanism may be controlled to adjust the pre-tension provided by the respective pre-tension wires in a substantially identical manner.

The method may further comprise the step of controlling a pitch angle of the wind turbine blades in accordance with the estimated rotor imbalance. In this case the rotor imbalance is counteracted by a combination of adjusting the pitch angles of the wind turbine blades and adjusting the pre-tension provided by the pre-tension wires. Adjusting the pitch angles may provide a faster response to a detected rotor imbalance than adjusting the pre-tension provided by the pre-tension wires.

### BRIEF DESCRIPTION OF THE DRAWINGS

The invention will now be described in further detail with reference to the accompanying drawings in which
Fig. 1 is a front view of a wind turbine being controlled in accordance with a method according to an embodiment of the invention, and
Fig. 2 is a block diagram illustrating a method according to an embodiment of the invention.

### DETAILED DESCRIPTION OF THE DRAWINGS

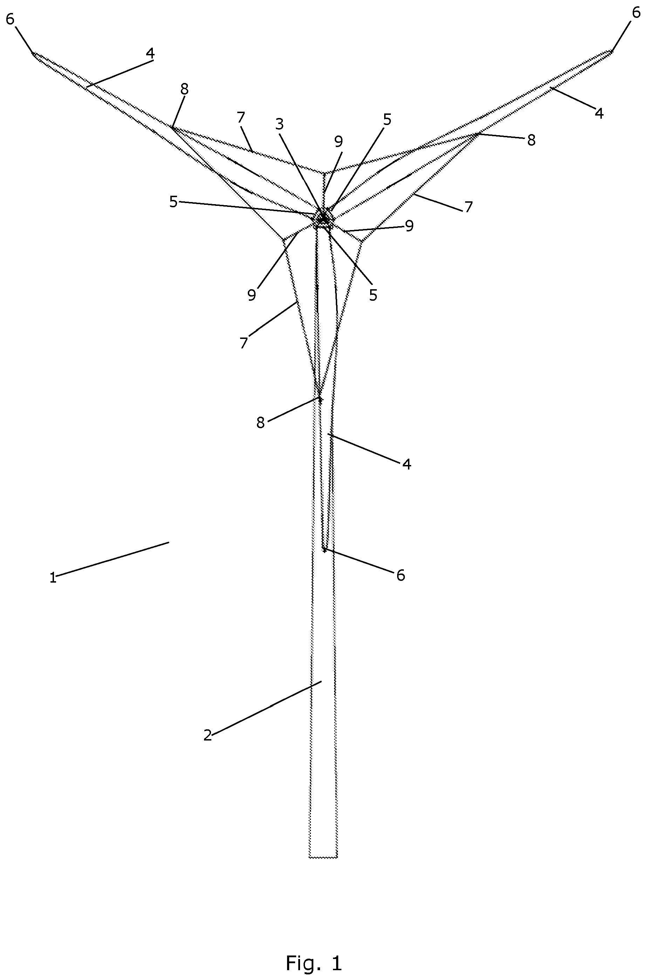

Fig. 1 is a front view of a wind turbine 1 being controlled in accordance with a method according to an embodiment of the invention. The wind turbine 1 comprises a tower 2 and a nacelle (not visible) mounted rotatably on the tower 2. A hub 3 carrying three wind turbine blades 4 is mounted rotatably on the nacelle. Accordingly, the wind turbine blades 4 rotate along with the hub 3, relative to the nacelle. The wind turbine blades 4 extend between a root end 5 connected to the hub 3 via a pitch mechanism, and a tip end 6 pointing away from the hub 3.

The wind turbine 1 further comprises three blade connecting wires 7. Each of the blade connecting wires 7 extends between a connection point 8 on one wind turbine blade 4 and a connection point 8 on a neighbouring wind turbine blade 4. Thereby each wind turbine blade 4 is connected to its neighbouring wind turbine blades 4 by respective blade connecting wires 7. This allows the wind turbine blades 4 to mutually support each other, as described above.

The wind turbine 1 further comprises three pre-tension wires 9. Each pre-tension wire 9 is connected to one of the blade connecting wires 7 and to a pre-tension adjustment mechanism (not shown) arranged in the hub 3. Thereby each pre-tension wire 9 provides a pre-tension in the blade connecting wire 7 which it is connected to, and the provided pre-tension determines to which extent the wind turbine blades 4 being interconnected by the blade connecting wire 7 support each other. The provided pre-tension can be adjusted by means of the pre-tension adjustment mechanism, thereby adjusting the mutual support of the wind turbine blades 4.

The wind turbine 1 of Fig. 1 may be controlled in the following manner. Initially, at least one parameter of the wind turbine 1, e.g. edge root moments of each of the wind turbine blades 4, is measured. Next, an estimate for a rotor imbalance is derived from the at least one measured parameter. For instance, measured edge root moments may be compared to a mean edge root moment, and if one or more of the measured edge root moments differs significantly from the mean edge root moment, it may be determined that a rotor imbalance which requires attention is present.

Finally, the pre-tension adjustment mechanism is controlled based on the estimated rotor imbalance in order to counteract the rotor imbalance. This could, e.g., include increasing the pre-tension provided by some of the pre-tension wires 9, while decreasing the pre-tension provided by other pre-tension wires 9. This may, e.g., result in the measured edge root moments of the wind turbine blades 4 approaching each other, thereby also approaching the mean edge root moment.

Thereby any detected rotor imbalance is handled in an easy, accurate and cost effective manner, simply by appropriately controlling the pre-tension adjustment mechanism, and thereby adjusting the pre-tension provided to the blade connecting wires 7 by the pre-tension wires 9.

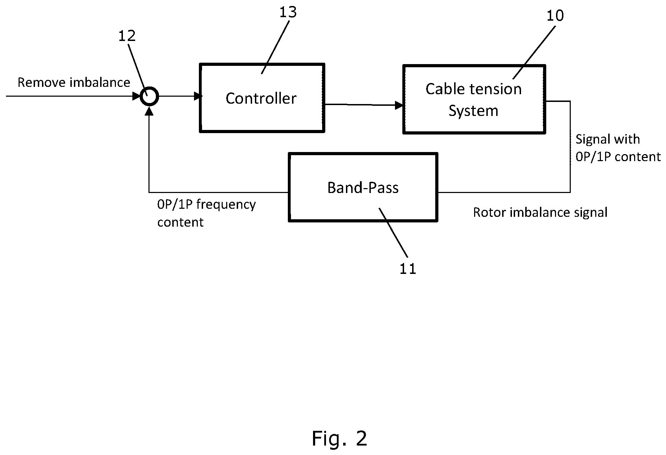

Fig. 2 is a block diagram illustrating a method according to an embodiment of the invention. The method illustrated in Fig. 2 may, e.g., be applied for controlling a wind turbine of the kind illustrated in Fig. 1.

A pre-tension adjustment mechanism 10 is controlled in order to provide pre-tension to blade connecting wires via pre-tension wires connected to the blade connecting wires and to the pre-tension adjustment mechanism 10, in the manner described above with reference to Fig. 1.

At least one parameter of the wind turbine, e.g. edge root moments of the wind turbine blades or tension in the pre-tension wires, is measured. Based thereon, a signal containing 0P and/or 1P content is derived and passed through a bandpass filter 11, and a rotor imbalance with 0P and/or 1P content is derived therefrom. In the present context the term '0P content' should be interpreted to mean signal content which represents static rotor imbalance, i.e. rotor imbalance which is not varying cyclically as a function of azimuth angle of the wind turbine blades and the rotor. Furthermore, in the present context the term '1P content' should be interpreted to mean signal content which varies cyclically as a function of azimuth angle of the wind turbine blades and the rotor, in such a manner that the cycle repeats once for each full rotation of the rotor.

The rotor imbalance signal is supplied to a comparator 12, which also receives a signal requesting removal of rotor imbalance. The result of the comparison is supplied to a controller 13 which controls the pre-tension adjustment mechanism 10.

The controller 13 then causes the pre-tension adjustment mechanism 10 to adjust the pre-tension provided by each of the pre-tension wires in accordance with the comparison signal. Thereby rotor imbalances including 0P and 1P components are counteracted.

## Claims

1. A method for controlling a wind turbine (1), the wind turbine (1) comprising a tower (2), a nacelle mounted on the tower (2), a hub (3) mounted rotatably on the nacelle, and three or more wind turbine blades (4), each wind turbine blade (4) extending between a root end (5) connected to the hub (3) via a pitch mechanism, and a tip end (6), the wind turbine (1) further comprising blade connecting wires (7), each blade connecting wire (7) extending between a connection point (8) on one wind turbine blade (4) and a connection point (8) on a neighbouring wind turbine blade (4), each blade connecting wire (7) thus interconnecting two neighbouring wind turbine blades (4), and pre-tension wires (9), each pre-tension wire (9) being connected to one of the blade connecting wires (7), at a position which is distanced from each of the connection points (8) on the wind turbine blades (4), and to a pre-tension adjustment mechanism (10), each pre-tension wire (9) thus providing pre-tension to the blade connecting wire (7) which it is connected to, the method comprising the steps of:
- measuring an edge moment of each of the wind turbine blades (4) as the at least one parameter of the wind turbine (1),
- deriving an estimate for a rotor imbalance of the wind turbine (1) from the measured edge moments, and
- controlling the pre-tension adjustment mechanism (10) based on the estimated rotor imbalance, thus adjusting the pre-tension applied by the pre-tension wires (9) to the blade connecting wires (7), in order to counteract the rotor imbalance.

2. A method according to claim 1, wherein the step of deriving an estimate for a rotor imbalance comprises deriving an estimate for a static rotor imbalance.

3. A method according to claim 1 or 2, wherein the step of deriving an estimate for a rotor imbalance comprises passing the measurements of the at least one parameter through a low pass filter (11).

4. A method according to claim 1, wherein the step of deriving an estimate for a rotor imbalance of the wind turbine (1) comprises comparing the edge moment of each wind turbine blade (4) to a mean edge moment of the wind turbine blades (4).

5. A method according to claim 4, wherein the step of controlling the pre-tension adjustment mechanism (10) comprises adjusting the pre-tension applied by each pre-tension wire (9) in such a manner that the difference between the edge moment of each wind turbine blade (4) and the mean edge moment of the wind turbine blades (4) is decreased.

6. A method according to any of claims 1-3, wherein the step of measuring at least one parameter of the wind turbine (1) comprises measuring a tension in each of the pre-tension wires (9).

7. A method according to any of the preceding claims, wherein the step of controlling the pre-tension mechanism (10) comprises individually adjusting the pre-tension provided by the respective pre-tension wires (9).

8. A method according to any of the preceding claims, further comprising the step of controlling a pitch angle of the wind turbine blades (4) in accordance with the estimated rotor imbalance.

## Patentansprüche

1. Verfahren zum Steuern einer Windkraftanlage (1), wobei die Windkraftanlage (1) einen Turm (2), eine an dem Turm (2) montierte Gondel, eine drehbar an der Gondel montierte Nabe (3) und drei oder mehr Windkraftanlagenblätter (4) umfasst, wobei sich jedes Windkraftanlagenblatt (4) zwischen einem Wurzelende (5), das über einen Blattwinkelmechanismus mit der Nabe (3) verbunden ist, und einem Spitzenende (6) erstreckt, wobei die Windkraftanlage (1) weiter Blattverbindungsdrähte (7), wobei sich jeder Blattverbindungsdraht (7) zwischen einem Verbindungspunkt (8) an einem Windkraftanlagenblatt (4) und einem Verbindungspunkt (8) an einem benachbarten Windkraftanlagenblatt (4) erstreckt, wobei jeder Blattverbindungsdraht (7) somit zwei benachbarte Windkraftanlagenblätter (4) miteinander verbindet, und Vorspanndrähte (9) umfasst, wobei jeder Vorspanndraht (9) an einer Position, die von jedem der Verbindungspunkte (8) an den Windkraftanlagenblättern (4) beabstandet ist, mit einem der Blattverbindungsdrähte (7), und mit einem Vorspannungseinstellmechanismus (10) verbunden ist, wobei jeder Vorspanndraht (9) somit Vorspannung für den Blattverbindungsdraht (7), mit dem er verbunden ist, bereitstellt, wobei das Verfahren die folgenden Schritte umfasst:
- Messen eines Kantenmoments jedes der Windkraftanlagenblätter (4) als den mindestens einen Parameter der Windkraftanlage (1),
- Ableiten einer Schätzung für eine Rotorunwucht der Windkraftanlage (1) aus den gemessenen Kantenmomenten, und
- Steuern des Vorspannungseinstellmechanismus (10) auf Basis der geschätzten Rotorunwucht und somit Einstellen der Vorspannung, die von den Vorspanndrähten (9) auf die Blattverbindungsdrähte (7) ausgeübt wird, um der Rotorunwucht entgegenzuwirken.

2. Verfahren nach Anspruch 1, wobei der Schritt des Ableitens einer Schätzung für eine Rotorunwucht das Ableiten einer Schätzung für eine statische Rotorunwucht umfasst.

3. Verfahren nach Anspruch 1 oder 2, wobei der Schritt des Ableitens einer Schätzung für eine Rotorunwucht das Leiten der Messungen des mindestens einen Parameters durch einen Tiefpassfilter (11) umfasst.

4. Verfahren nach Anspruch 1, wobei der Schritt des Ableitens einer Schätzung für eine Rotorunwucht der Windkraftanlage (1) das Vergleichen des Kantenmoments jedes Windkraftanlagenblatts (4) mit einem mittleren Kantenmoment der Windkraftanlagenblätter (4) umfasst.

5. Verfahren nach Anspruch 4, wobei der Schritt des Steuerns des Vorspannungseinstellmechanismus (10) das Einstellen der Vorspannung, die von jedem Vorspanndraht (9) ausgeübt wird, in einer solchen Weise umfasst, dass die Differenz zwischen dem Kantenmoment jedes Windkraftanlagenblatts (4) und dem mittleren Kantenmoment der Windkraftanlagenblätter (4) verringert wird.

6. Verfahren nach einem der Ansprüche 1-3, wobei der Schritt des Messens mindestens eines Parameters der Windkraftanlage (1) das Messen einer Spannung in jedem der Vorspanndrähte (9) umfasst.

7. Verfahren nach einem der vorstehenden Ansprüche, wobei der Schritt des Steuerns des Vorspannmechanismus (10) das individuelle Einstellen der von den jeweiligen Vorspanndrähten (9) bereitgestellten Vorspannung umfasst.

8. Verfahren nach einem der vorstehenden Ansprüche, das weiter den Schritt des Steuerns eines Blattwinkels der Windkraftanlagenblätter(4) in Übereinstimmung mit der geschätzten Rotorunwucht umfasst.

## Revendications

1. Procédé de commande d'une éolienne (1), l'éolienne (1) comprenant une tour (2), une nacelle montée sur la tour (2), un moyeu (3) monté de manière rotative sur la nacelle, et trois pales d'éolienne (4) ou plus, chaque pale d'éolienne (4) s'étendant entre une extrémité de pied (5) reliée au moyeu (3) via un mécanisme de calage et une extrémité de pale (6), l'éolienne (1) comprenant en outre des câbles de liaison de pales (7), chaque câble de liaison de pales (7) s'étendant entre un point de liaison (8) sur une pale d'éolienne (4) et un point de liaison (8) sur une pale d'éolienne (4) voisine, chaque câble de liaison de pales (7) reliant ainsi l'une à l'autre deux pales d'éolienne (4) voisines, et des câbles de précontrainte (9), chaque câble de précontrainte (9) étant relié à l'un des câbles de liaison de pales (7), à une position à distance de chacun des points de liaison (8) sur les pales d'éolienne (4), et à un mécanisme de réglage de précontrainte (10), chaque câble de précontrainte (9) fournissant ainsi une précontrainte au câble de liaison de pale (7) auquel il est relié, le procédé comprenant les étapes de :
- mesure d'un moment de bord de chacune des pales d'éolienne (4) comme le au moins un paramètre de l'éolienne (1),
- dérivation d'une estimation pour un déséquilibre de rotor de l'éolienne (1) à partir des moments de bord mesurés, et
- commande du mécanisme de réglage de précontrainte (10) sur la base du déséquilibre de rotor estimé, réglant ainsi la précontrainte appliquée par les câbles de précontrainte (9) sur les câbles de liaison de pales (7), afin de contrer le déséquilibre de rotor.

2. Procédé selon la revendication 1, dans lequel l'étape de dérivation d'une estimation pour un déséquilibre de rotor comprend la dérivation d'une estimation pour un déséquilibre statique de rotor.

3. Procédé selon la revendication 1 ou 2, dans lequel l'étape de dérivation d'une estimation pour un déséquilibre de rotor comprend le passage des mesures de l'au moins un paramètre à travers un filtre passe-bas (11).

4. Procédé selon la revendication 1, dans lequel l'étape de dérivation d'une estimation pour un déséquilibre de rotor de l'éolienne (1) comprend la comparaison du moment de bord de chaque pale d'éolienne (4) à un moment de bord moyen des pales d'éolienne (4).

5. Procédé selon la revendication 4, dans lequel l'étape de commande du mécanisme de réglage de précontrainte (10) comprend le réglage de la précontrainte appliquée par chaque câble de précontrainte (9) de manière à ce que la différence entre le moment de bord de chaque pale d'éolienne (4) et le moment de bord moyen des pales d'éolienne (4) diminue.

6. Procédé selon l'une quelconque des revendications 1-3, dans lequel l'étape de mesure d'au moins un paramètre de l'éolienne (1) comprend la mesure d'une tension dans chacun des câbles de précontrainte (9).

7. Procédé selon l'une quelconque des revendications précédentes, dans lequel l'étape de commande du mécanisme de précontrainte (10) comprend le réglage individuel de la précontrainte fournie par les câbles de précontrainte (9) respectifs.

8. Procédé selon l'une quelconque des revendications précédentes, comprenant en outre l'étape de commande d'un angle de calage des pales d'éolienne (4) conformément au déséquilibre de rotor estimé.
